# EUROPEAN PATENT APPLICATION

(11) **EP 3 345 873 A1**
(43) Date of publication of application: **11.07.2018**
(21) Application number: 18150513.2
(22) Date of filing: 05.01.2018
(51) Int. Cl.: C02F 3/08, C02F 1/00, B01D 24/36, C02F 1/78, C02F 103/44, B01D 24/46, B60S 3/04

(54) **A DEVICE FOR PURIFYING WASTE WATER FROM A CAR WASH, AS WELL AS A METHOD OF PURIFYING SUCH WASTE WATER**

(30) Priority: 06.01.2017 NL 2018135
(71) Applicant: IPE Procestechniek B.V., 1821 BV Alkmaar (NL)
(72) Inventor: MOENS, Reinald Adrianus Johannes, 1965 AD Heemskerk (NL)
(74) Representative: Altenburg, Bernardus Stephanus Franciscus

(57) **Abstract**

Device (100) and method for purifying waste water from a car wash (190) for vehicles (191), which device (100) comprises a reservoir (210) that comprises a purification chamber (211).

For preventing blockage of spray nozzles (193) of the carwash (190) the purification chamber (211) of the device (100) comprises carrier particles (290) having a density of less than 1 kg/litre;
and the device (100) comprises a separator (220) for separating water passed along the carrier particles (290) from the carrier particles (290). A biofilm is formed on the carrier particles (290) that catches particles from the waste water when the waste water produced by the carwash (190) is passed along the carrier particles (290).

## Description

The present invention relates to a device for purifying waste water from a car wash for vehicles, which device comprises
- a reservoir which comprises
   - a purification chamber,
   - an inlet for supplying the water to be purified to the reservoir, and
   - an outlet for discharging purified water from the reservoir; and
- a pump.

In the art it is known to purify waste water produced in a carwash for vehicles such as cars, in order for it to be used again. For that purpose, a device according to the preamble is used. To bring about the purification of waste water, use is made of a filter, such as a 300 um filter.

A problem is that when reusing the water, a spray nozzle (nozzle) might get blocked. This is objectionable as this may cause delays in the carwash. In order to minimise delays, the spray nozzle is replaced by a clean spray nozzle and is cleaned outside the carwash in order for it to be ready for use once a next blockage arises. This way of working requires a lot of manpower, relatively speaking, and still does not rule out delays in the car wash.

The present invention intends to provide a device of the type mentioned in the preamble wherein the risk of blockage of the spray nozzle can be reduced to a large degree.

For that purpose, a device according to the preamble is characterized in that the purification chamber of the device contains carrier particles, which carrier particles have a density of less than 1 kg/litre; and the device comprises a separator for separating water passed along the carrier particles and the carrier particles; and the inlet for waste water in the purification chamber is situated below in the separator.

Particles in water adhere to the carrier particles, as a result of which the water becomes considerably cleaner. A biofilm is formed on the carrier particles, which biofilm catches the particles. The carrier particles provide a large surface area. Typically, the carrier particles provide a surface area of more than 500, preferably more than 1000, such as 1600 m² per m³ of carrier particles.

A density of less than 1 kg/litre makes it possible to obtain a stable bed having a bed top side defined by the fluid level. The carrier particles have a density of less than 0.98 kg/litre, preferably less than 0.9 kg/litre. A lower density means a more stable bed or a bed that is stable sooner, past which bed the waste water can flow and mutual movement of the carrier particles during purification of the waste water remains limited. The limited or absent mutual movement means that a biofilm formed on the carrier particles will not detach and therefor lead to detached biofilm material that would cause blockage of a spray nozzle. It was found that by working this way, the spray nozzles do not or hardly ever get blocked, whereas the device itself needs very little maintenance.

By placing the inlet lower, it becomes possible to pass the waste water upwards through a bed of the carrier particles. In that way, gravity helps preventing that relatively heavy particles, that means particles having a relatively high density, such as sand particles, end up in the water obtained after to the separator.

An advantageous embodiment is characterized in that the reservoir comprises a free top space above the separator.

This makes a more efficient purification of the carrier particles by agitation of the carrier particles possible. The free top space preferably is situated at least 1 cm above the lowest point of the separator past which water that has been passed along the bed is able to leave the purification chamber, more preferably at least 5 cm.

An advantageous embodiment is characterized in that the device comprises an apparatus for oxidative follow-up treatment of water from the purification chamber.

It was found that this contributes to preventing the spray nozzles in a carwash from getting blocked, as a result of which it requires less maintenance and the washing of vehicles does not have to be interrupted.

Due to the oxidative follow-up treatment and the biofilm formed on the carrier particles, CO₂ is surrendered to the ambient air again by spraying with the spray nozzles of the carwash, whereas oxygen is absorbed from the air and ends up in the waste water to be purified. Spraying therefore is an integral part of the method.

An advantageous embodiment is characterized in that the apparatus for oxidative follow-up treatment comprises an ozone generator.

By spraying wash water via the spray nozzles for cleaning vehicles, the wash water absorbs oxygen from the air. By means of the ozone generator this is converted into ozone. As a result, no oxidant needs to be supplied separately, which simplifies the device and its operation.

An advantageous embodiment is characterized in that the device comprises a conductivity meter and is configured for by means of an output signal thereof controlling the apparatus for oxidative follow-up treatment.

It was found that the conductivity is a simple measure for how dirty the waste water is. During winter the conductivity of water increases due to salt in the waste water, whereas at the same time organic dirt increases as well.

To conclude with, the present invention relates to a method for operating a carwash, which method comprises cleaning a vehicle by spraying using a spray nozzle, collecting the waste water to be purified that results from cleaning the vehicle, and subjecting the waste water to be purified to
a purification;
wherein a device according to any one of the claims 1 - 5 is used, wherein
- the waste water to be purified is passed through a bed of carrier particles in the purification chamber,
- the waste water passed through the bed is separated from the carrier particles, and
- the water obtained once it has been passed through the bed is transported from the purification chamber to a spray nozzle.

It was found that using such a method reduces the risk of the spray nozzle getting blocked.

The pH of the waste water to be purified will in actual practice be between 4 and 10, preferably between 5 and 9, and if necessary will be adjusted.

An advantageous embodiment is characterized in that the carrier particles have a density of less than 1 kg/litre.

This makes it possible to obtain a stable bed having a bed top side defined by the liquid level. The carrier particles have a density of less than 0.98 kg/litre, preferably less than 0.9 kg/litre. A lower density means a more stable bed or a bed that is stable sooner, past which the waste water can flow and mutual movement of the carrier particles during purification of the waste water remains limited. The limited or absent mutual movement means that a biofilm formed on the carrier particles will not detach and therefor lead to detached biofilm material that would cause blockage of a spray nozzle. It was found that by working this way, the spray nozzles do not or hardly ever get blocked, whereas the device itself needs very little maintenance.

An advantageous embodiment is characterized in that the waste water to be purified is introduced below the carrier particles and passed upwards through a bed of the carrier particles and waste water that has been passed through the bed is separated from the carrier particles of the bed prior to being passed to the spray nozzle.

In that way gravity helps preventing that relatively heavy particles, such as sand particles, end up in the water obtained after to the separator.

An advantageous embodiment is characterized in that the water obtained from the purification chamber is subjected to an oxidative follow-up treatment prior to being passed to the spray nozzle.

It was found that this contributes to preventing the spray nozzles in a carwash from getting blocked, as a result of which it requires less maintenance and the washing of vehicles does not need to be interrupted so often. It was found that when using the method according to the invention, the conduit leading to a spray nozzle remains cleaner than is the case in the known method, wherein use is made of a 300 um filter. It was found that using the method according to the invention reduces growth in a conduit supplying a spray nozzle, which is considered to contribute to preventing the spray nozzle from getting blocked.

An advantageous embodiment is characterized in that the waste water to be purified by passing it through the bed, is passed through the bed at a flow rate of less than 800 litres per minute per horizontal square meter.

In that way there is sufficient time for interaction and the particles in the water are more efficiently caught by the carrier particles.

An advantageous embodiment is characterized in that at least a part of a biofilm formed on the carrier particles is periodically stripped from the carrier particles by agitation of the carrier particles of the bed, wherein the released biofilm material is discharged with water.

Agitating may for instance take place by means of stirring. Discharge then does not take place via a spray nozzle of the carwash in order to prevent it from getting blocked.

An advantageous embodiment is characterized in that agitating the particles takes place by introducing a gas below the bed.

Advantageously the gas is air, although it might be another gas such a nitrogen. For that purpose, the device according to the invention preferably comprises an inlet for supplying gas, preferably an air inlet. The air inlet may be directly connected to the purification chamber. Instead thereof the gas, such as air, may also be introduced via the inlet for waste water. This way of agitating can very easily be automated. Introduced air leaves the reservoir via the separator, and is discharged to the atmosphere. Prior to it being passed to the spray nozzle, water can be collected in a receptacle (drain) which simplifies the discharge of air.

The present invention will now be elucidated on the basis of the drawing, in which:
Figure 1 shows a schematic view of a carwash having a water purification device; and
Figure 2 schematically shows the device for purifying waste water.

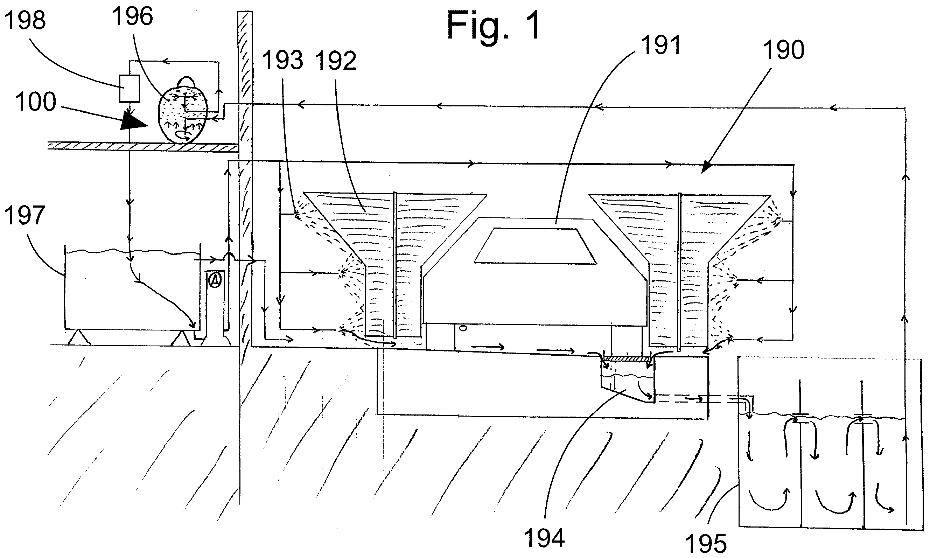

Figure 1 schematically shows a carwash 190 having a water purification device which comprises a device 100 for purifying waste water according to the invention.

A car 191 can be seen, which is cleaned in the carwash 190 with brushes 192 using water from spray nozzles 193. The waste water, enriched with oxygen due to spraying, is collected in a drain 194 and transported to a collection tank 195 for waste water. From the collection tank 195 the waste water is transported to the device 100, which will be described in detail below, where the waste water is purified. Water purified in the device 100 is subjected to an apparatus 196 which generates ozone with the oxygen in the water. Such an apparatus 196 is commercially available.

The waste water thus purified can be collected in a collection reservoir 197 and is suitable to be used again in the car wash 190. For inhibiting the growth of bacteria, a further apparatus 198 that discharges copper ions and/or silver ions can be included in the water purification device, preferably subsequent to the device 100, such as subsequent to the collection reservoir 197.

For the sake of simplicity pumps in the water purification device have been left out in Figure 1. Their use for existing water purification devices for carwashes is already known and therefore does not need further explanation.

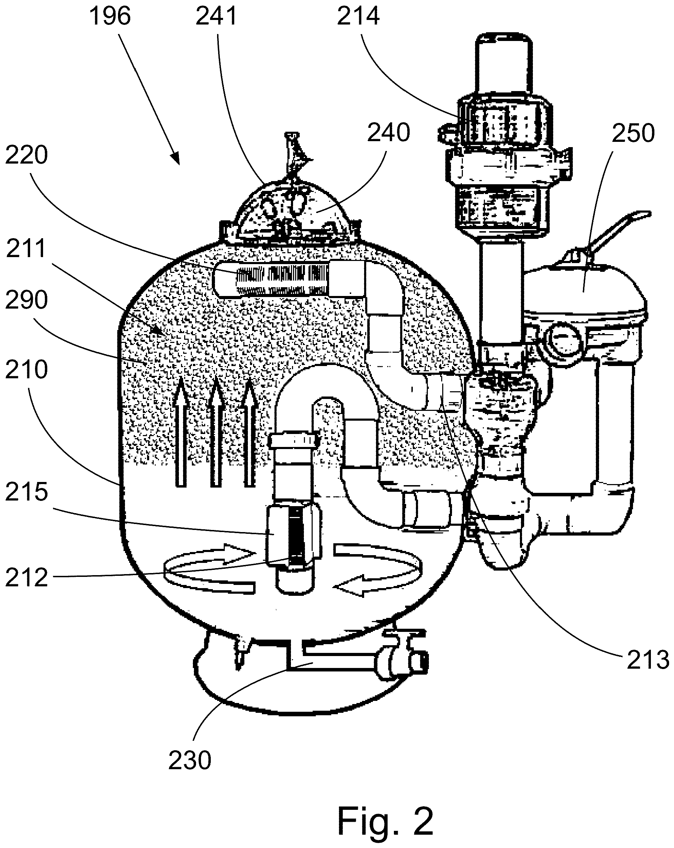

Figure 2 schematically shows the device 100 for purifying waste water. The device 100 for purifying waste water of a car wash 190 for vehicles 191, comprises a reservoir 210 (cistern 210) which comprises a purification chamber 211, an inlet 212 for supplying the water to be purified to the reservoir 210, and an outlet 213 for discharging purified water from the reservoir 210. The device also comprises a pump 214 for supplying the waste water to be purified to the reservoir 210.

The purification chamber 211 of the device 100 contains carrier particles 290, which carrier particles 290 have a density that is lower than the density of the waste water. In the embodiment described here, the carrier particles are LDPE globules having a diameter of approximately 4 mm. Said carrier particles 290 serve as carrier for micro-organisms growing on the surface of carrier particles and degrade waste matter present in the waste water.

The carrier particles 290 remain floating and the waste water is slowly passed along the carrier particles 290 during operation of the device 100. When the waste water is passed through the packed bed of carrier particles 290 using a slight speed, the relatively heavy particles, in particular sand, sag down. Other particles that do not sag down, have an increased risk of remaining stuck to the biofilm on the carrier particles 290. The device therefore functions like a particle filter, and stopping particles including bacteria contributes to reducing the risk of the spray nozzles 193 getting blocked. As the carrier particles 290 form a packed bed (against the fluid surface when the reservoir is not completely full), the distance between carrier particles 290 is small and the chance of the pollutions being retained by the carrier particles 290 is substantial. The device therefore is compact and efficient. In the packed bed, the biofilm does no tend to get detached.

When using higher speeds, the waste water is introduced such below the bed that it flows in circumferential direction of the bed and a centrifugal force contributes to having the relatively heavy particles, such as sand, sag down. This may for instance be achieved by central introduction and the use of curved blades 215. This also helps preventing the bed of carrier particles 290 from being disturbed. The inlet 212 therefore is advantageously situated below the bed of carrier particles 290.

The device 100 comprises a separator 220 for separating waste water passed along the carrier particles 290 from the carrier particles 290. In the embodiment shown here, the separator 220 is a pipe that has been closed off at one of its ends, and has a plurality of through-apertures preventing the passage of carrier particles 290, such as slits having a width that is smaller than the diameter of the carrier particles 290. The separator 220 is situated close to the fluid surface in the purification chamber 211. Preferably the separator 220 is situated below the fluid surface and at its upper side the separator 220 is provided with through-apertures, which contributes to a more homogeneous flow through the bed of carrier particles 290 and therefore a more efficient use of its surface area for catching unwanted particles.

Waste water purified in the device 100 leaves the device 100 via the separator 220.

When the biofilm on the carrier particles 290 becomes too thick, air at a relatively large flow rate, such as 900 litres per minute, can be blown in via the inlet 212, which air is discharged via the separator 220 and released into the atmosphere. As a result, the carrier particles 290 collide with and rub against each other, as a result of which the biofilm gets detached. Water or the like can now be introduced into the purification chamber via the separator 220 and water including biofilm material is able to leave the purification chamber 211 via a drain pipe 230. It is noted that it is not necessary or even less desirable to remove the biofilm in its entirety; after all it ensures the purifying action of the device.

The cistern 210 provides a top space 240, here covered by a transparent dome 241 which provides a view of the bed of carrier particles 290 or, for purifying them, during agitating them.

A two-way valve 250 can advantageously be used for switching between the two or more flows selected from waste water, water for discharging detached biofilm material and air. The device can be operated with a 90% reuse of water, 10% of clean water to be added per vehicle. Clean water can be added at any point of the device, and preferably between the reservoir 210 and the spray nozzles 193.

## Claims

1. A device (100) for purifying waste water from a car wash (190) for vehicles (191), which device (100) comprises
- a reservoir (210) which comprises
- a purification chamber (211),
- an inlet (212) for supplying the water to be purified to the reservoir (210), and
- an outlet (213) for discharging purified water from the reservoir (210); and
- a pump (214);
**characterized in that** the purification chamber (211) of the device (100) contains carrier particles (290), which carrier particles (290) have a density of less than 1 kg/litre;
and the device ((100) comprises a separator (220) for separating water passed along the carrier particles (290) and the carrier particles (290);
and the inlet (212) for waste water in the purification chamber is situated below the separator (220).

2. The device (100) according to claim 1, wherein the reservoir (210) comprises a free top space above the separator (220).

3. The device (100) according to claim 1 or 2, wherein the device (100) comprises an apparatus (196) for oxidative follow-up treatment of water from the purification chamber.

4. The device (100) according to claim 3, wherein the apparatus (196) for oxidative follow-up treatment comprises an ozone generator.

5. The device (100) according to any one of the claims 3 or 4, wherein the device (100) comprises a conductivity meter (198) and is configured for by means of an output signal thereof controlling the apparatus (196) for oxidative follow-up treatment.

6. A method for operating a car wash (190) which method comprises cleaning a vehicle by spraying using a spray nozzle (193), collecting the waste water to be purified that results from cleaning the vehicle, and subjecting the waste water to be purified to a purification;
**characterized in that** a device (100) according to any one of the claims 1 - 5 is used, wherein
- the waste water to be purified is passed through a bed of carrier particles (290) in the purification chamber,
- the waste water passed through the bed is separated from the carrier particles (290), and
- the water obtained once it has been passed through the bed is transported from the purification chamber to a spray nozzle (193).

7. The method according to claim 6, wherein the carrier particles (290) have a density of less than 1 kg/litre.

8. The method according to claim 7, wherein the waste water to be purified is introduced below the carrier particles (290) and passed upwards through a bed of the carrier particles (290) and waste water that has been passed through the bed is separated from the carrier particles (290) of the bed prior to being passed to the spray nozzle (193).

9. The method according to any one of the claims 6 - 8, wherein the water obtained from the purification chamber is subjected to an oxidative follow-up treatment prior to being passed to the spray nozzle (193).

10. The method according to any one of the claims 6 - 9, wherein the waste water to be purified by passing it through the bed is passed through the bed at a flow rate of less than 800 litres per minute per horizontal square meter.

11. The method according to any one of the claims 6 - 10, wherein at least a part of a biofilm formed on the carrier particles (290) is periodically stripped from the carrier particles (290) by agitation of the carrier particles (290) of the bed, wherein the released biofilm material is discharged with water.

12. The method according to claim 11, wherein agitating the particles takes place by introducing a gas below the bed.
